# EUROPÄISCHE PATENTSCHRIFT

(11) **EP 2 864 743 B1**
(45) Veröffentlichungstag und Bekanntmachung des Hinweises auf die Patenterteilung: **07.12.2016**
(21) Anmeldenummer: 13729927.7
(22) Anmeldetag: 07.06.2013
(51) Int. Cl.: G01K 1/08, G01K 7/02

(54) **TEMPERATURMESSVORRICHTUNG**
TEMPERATURE-MEASURING APPARATUS
DISPOSITIF DE MESURE DE TEMPÉRATURE

(30) Priorität: 26.06.2012 DE 102012105547
(43) Veröffentlichungstag der Anmeldung: 29.04.2015
(73) Patentinhaber: Endress+Hauser Wetzer GmbH+Co. KG, 87484 Nesselwang (DE)
(72) Erfinder: KALTEIS, Helmut, 87616 Marktoberdorf (DE); SEEFELD, Peter, 87459 Pfronten (DE)
(74) Vertreter: Andres, Angelika Maria
(86) Internationale Anmeldenummer: PCT/EP2013/061787
(87) Internationale Veröffentlichungsnummer: WO 2014/001061

(56) Entgegenhaltungen:
- JP-A- S58 222 582
- US-A- 3 864 975

## Beschreibung

Die Erfindung bezieht sich auf eine Temperaturmessvorrichtung, ein Messelement für eine derartige Temperaturmessvorrichtung und ein Verfahren zur Herstellung der Temperaturmessvorrichtung.

Zur Messung der Temperatur, beispielsweise in einer industriellen Anlage, sind verschiedene Messprinzipien bekannt geworden. Häufig werden Thermoelemente verwendet, um den Temperaturgradienten zwischen einer Stelle in einem Prozess und in der Prozessumgebung festzustellen. Aus dem Stand der Technik sind viele derartige Vorrichtungen bekannt geworden, bei denen beispielsweise mehrere Thermoelemente in einem als Schutzrohr dienenden Mantel angeordnet sind. JP S5822282 A und US 3864975 A beschreiben Thermoelemente mit mehreren Messstellen.

Diese aus dem Stand der Technik bekannten Lösungen weisen jedoch den Nachteil auf, dass sie entweder bei dem Ziehprozess bei dem Mantel als auch Thermoelemente gelängt werden, eine hohe Fehleranfälligkeit und mangelnde Reproduzierbarkeit aufweisen. Der Ziehprozess erfolgt dabei bspw. durch Walken oder allgemein durch mechanisches Bearbeiten und Umformen des Mantels und der darin angeordneten Thermoelemente. Ferner handelt es sich bei dem Material der Thermoelemente um teueres Material, im Vergleich zu anderen elektrischen Leitern..

Ausgehend von diesen Nachteilen, ist es Aufgabe der Erfindung, eine robuste Temperaturmessvorrichtung vorzuschlagen, die eine gegenüber den aus dem Stand der Technik bekannten Lösungen zumindest gleichwertige thermische als auch mechanische Festigkeit aufweist und die auch den erhöhten mechanischen Belastung eines herstellungsbedingten Ziehprozesses standhält.

Die Aufgabe wird erfindungsgemäß durch eine Temperaturmessvorrichtung, ein Messelement und ein Verfahren zur Herstellung der Temperaturmessvorrichtung gelöst.

Hinsichtlich der Temperaturmessvorrichtung wird die Aufgabe durch eine Temperaturmessvorrichtung mit wenigstens einem Messelement gelöst, wobei die Temperaturmessvorrichtung einen, vorzugsweise zylindrischen besonders bevorzugten metallischen Mantel aufweist, indem das Messelement angeordnet ist. Der Mantel dient dabei hauptsächlich zum Schutz des Messelementes vor einem Messstoff dessen Temperatur durch das Messelement bestimmt werden soll.

Das Messelement umfasst dabei wenigstens ein Thermoelement, das aus wenigstens zwei Thermodrähten besteht. Beispielsweise kann ein Thermoelement, das nur aus zwei Thermodrähten besteht, verwendet werden. Andererseits sind auch Thermoelemente bekannt geworden, die aus mehr als zwei Thermodrähten bestehen.

Ferner sind die Thermodrähte auf einer Höhe entlang der Längsachse des Mantels an einem Messpunkt miteinander verbunden. Der Messpunkt bildet dabei die Stelle, an der die im Prozess vorhandene Temperatur bestimmt wird. Dabei wird die Temperaturdifferenz zwischen dem Messpunkt und der Prozessumgebung bestimmt. Diese Messstelle kann sich dabei auf einer bestimmten Höhe des Mantels der Temperaturmessvorrichtung befinden. Vorzugsweise ist genau ein Messpunkt auf einer vorgegebenen Höhe entlang der Längsachse des Mantels angeordnet.

Die Thermodrähte der Temperaturmessvorrichtung verlaufen eine erste Strecke entlang der Längsachse des Mantels zumindest bis zum Messpunkt. Dabei können die Thermodrähte beispielsweise entlang der Längsachse des Mantels und im Wesentlichen parallel zur Längsachse und zueinander verlaufen.

Die Temperaturmessvorrichtung beziehungsweise das Messelemente weist ferner, zumindest zwei Anschlussdrähte auf, die eine zweite Strecke auf der den Thermodrähten gegenüberliegenden Seite des Messpunkts entlang der Längsachse des Mantels verlaufen und mit den Thermodrähten verbunden sind. Diese zwei Anschlussdrähte bilden somit eine Verlängerung der Thermodrähte.

Vorzugsweise weist der Mantel einen Boden auf und die Strecke zwischen dem Ende der Thermodrähte und dem Boden bilden dabei die zweite Strecke entlang derer, die zwei Anschlussdrähte verlaufen. Die Anschlussdrähte erstrecken sich dabei im Wesentlichen bis zum Boden bzw. bis zu einem an den Boden angrenzenden Bereich des Mantels.

Ferner bestehen die zwei Anschlussdrähte aus einem Material, dass eine höhere Zugfestigkeit aufweist als die Thermodrähte. Der wenigstens eine erste Thermodraht und der wenigstens zweite Thermodraht, aus dem das Thermoelement besteht, bestehen dabei aus unterschiedlichen Materialien. Das Material der Anschlussdrähte unterscheidet sich von dem für den wenigstens ein ersten und den wenigstens einen zweiten Thermodraht verwendeten Material.

Die Anschlussdrähte können entweder aus dem gleichen Material oder aus unterschiedlichen Materialien bestehen. Jedoch unterscheidet sich das Material aus den die Anschlussdrähte bestehen von dem Material, aus den die Thermodrähte bestehen zumindest dadurch, dass das Material aus dem die Anschlussdrähte bestehen eine höhere Zugfestigkeit aufweist als das jeweilige Material aus dem die Thermodrähte bestehen. Die Zugfestigkeit ist dabei die Spannung, die im Zugversuch aus der maximal berechneten Zugkraft bezogen auf dem ursprünglichen Querschnitt der Drähte bestimmt wird. Als Maßeinheit für die Zugkraft dient dabei beispielsweise die Einheit von Newton pro mm² oder die Einheit Megapascal.

Das Material aus dem die Anschlussdrähte bestehen unterscheidet sich von denjenigen aus, dem die Thermodrähte bestehen dahingehend, dass das Material aus dem die Anschlussleitung bestehen, eine Höhere Zugfestigkeit in Newton pro mm² aufweist. Wie bereits erwähnt, können dabei neben den Thermodrähten auch die Anschlussdrähte aus unterschiedlichen Materialien bestehen. Besonders bevorzugt bestehen die Anschlussdrähte dabei aus Materialien, die im Gegensatz zu Materialien aus dem die Thermodrähte bestehen preisgünstiger sind. Die Anschlussdrähte können dabei aus unterschiedlichen Materialien oder gleichen Materialien bestehen.

In einer Ausführungsform der Temperaturmessvorrichtung dienen die Thermodrähte zur Bestimmung der Temperatur, wobei zwischen den Enden der Thermodrähte eine der Temperatur an dem Messpunkt entsprechende Spannung abgreifbar ist. Die Anschlussdrähte bilden dabei "Blindelemente", die im Wesentlichen nur für den Fertigungsprozess der Temperaturmessvorrichtung dienen. Die Anschlussdrähte haben dabei keinen Einfluss auf die am Messpunkt vorliegende Temperatur beziehungsweise auf die zwischen den Enden der Thermodrähte abgreifbare Spannung.

In einer weiteren Ausführungsform der Temperaturmessvorrichtung verlaufen die Anschlussdrähte auf der den Thermodrähten gegenüberliegenden Seite des Messpunkts und sind mit den Thermodrähten verbunden. Vorzugsweise sind die Anschlussdrähte auf der gegenüberliegenden Seite des Messpunkts mit den Thermodrähten verbunden. Durch die Thermodrähte und die Anschlussdrähte erstrecken sich vorzugsweise im Wesentlichen über die gesamte Länge des Mantels. Ferner sind die Thermodrähte dabei bevorzugt so angeordnet, dass sich ihre freien Enden außerhalb des Mantels befinden, so dass diese freien Enden kontaktierbar sind und ein Spannung zwischen ihnen abgegriffen werden kann, die der Temperatur am Messpunkt entspricht.

In einer weiteren Ausgestaltung der Temperaturmessvorrichtung weisen die Thermodrähte jeweils einen ersten Abschnitt auf, der bis zu dem Messpunkt verläuft und ferner jeweils einen zweiten Abschnitt, der zwischen dem Messpunkt und den Anschlussdrähten verläuft. Die Thermodrähte werden also am Messpunkt miteinander verbunden, verlaufen jedoch noch ein Stück weiter entlang der Längsachse des Mantels, um dann mit den Anschlussdrähten verbunden zu werden. Die erste Strecke entlang der die Thermodrähte verlaufen, besteht also aus einen ersten Abschnitt der bis zum Messpunkt verläuft und einen zweiten Abschnitt der vom Messpunkt ausgehend ein weiteres Stück der ersten Strecke bildet.
In einer Ausführungsform der Temperaturmessvorrichtung bilden die Anschlussdrähte Verlängerungen der Thermodrähte. Wobei die Anschlussdrähte Verlängerungen der Thermodrähte bilden und an die jeweiligen Enden der Thermodrähte angeschlossen sind bzw. mit den jeweiligen Enden verbunden sind. Dabei ist vorzugsweise ein Thermodraht mit genau einem Anschlussdraht verbunden.

In einer weiteren Ausführungsform der Temperaturmessvorrichtung ist die erste Strecke und die zweite Strecke entlang der Längsachse des Mantels durch die Höhe entlang der Längsachse des Mantels vorgegeben, auf der die Verbindung zwischen den Thermodrähten und den Anschlussdrähten liegt. Die Temperaturmessvorrichtung weist also im Wesentlichen bezogen auf das Messelement zwei Teilbereiche, die durch die erste beziehungsweise die zweite Strecke gebildet werden auf.

In einer weiteren Ausführungsform der Temperaturmessvorrichtung ist ein erster der beiden Anschlussdrähte mit einem ersten der beiden Thermodrähte und zweiter der beiden Anschlussdrähte mit einem zweiten der beiden Thermodrähte verbunden. Derart werden Leiterelemente gebildet, die einen Abschnitt bestehend aus einem Thermodraht und einem Abschnitt bestehend aus einem Anschlussdraht aufhalten. Im Fall eines einzigen Messelements ist also ein erster Thermodraht aus einem ersten Material vorgesehen, der mit einem ersten Anschlussdraht aus einem zweiten Material verbunden ist. Ferner ist ein zweiter Thermodraht vorgesehen, der mit einem zweiten Anschlussdraht verbunden ist. Die Materialien aus denen die Thermodrähte bestehen unterschieden sich messprinzipbedingt voneinander, während die Anschlussdrähte bevorzugt aus dem gleichen Material bestehen. Der erste und der zweite Thermodraht weisen ebenso wie der erste und der zweite Anschlussdraht bevorzugt die gleiche Länge auf. Diese derart gebildeten bzw. aufgebauten Leiterelemente können auch vorgefertigt werden und erst bei dem Zusammensetzen der Temperaturmessvorrichtung können die Thermodrähte, wie im Folgenden beschrieben, miteinander verbunden werden um einen Messpunkt zu bilden.

Folgenden beschrieben, miteinander verbunden werden können, um einen Messpunkt zu bilden.

In einer weiteren Ausführungsform der Temperaturmessvorrichtung ist der erste Anschlussdraht auf einer Höhe entlang der Längsachse des Mantels mit dem ersten Thermodraht verbunden, die sich von der Höhe entlang der Längsachse des Mantels unterscheidet, auf der der zweite Anschlussdraht mit dem zweiten Thermodraht verbunden ist.

In einer weiteren Ausführungsform der Temperaturmessvorrichtung sind die Anschlussdrähte mit den Thermodrähten mittels Quetschösen verbunden.

In einer weiteren Ausführungsform der Temperaturmessvorrichtung sind die Thermodrähte mittels eines ring- oder hülsenförmigen Verbindungsmittels am Messpunkt miteinander verbunden, wobei das Verbindungsmittel vorzugsweise aus dem Material eines der Thermodrähte besteht, und besonders bevorzugt aus einem Material das sich von demjenigen der Thermodrähte unterscheidet besteht.

In einer Ausführungsform der Temperaturmessvorrichtung sind die Thermodrähte mit den Anschlussdrähten am Messpunkt verbunden.

In einer weiteren Ausführungsform der Temperaturmessvorrichtung bestehen die beiden Anschlussdrähte aus dem gleichen Material.

In einer weiteren Ausführungsform der Temperaturmessvorrichtung umfasst die Temperaturmessvorrichtung mehrere Messelemente nach einer der vorgeschlagenen Ausführungsform, wobei der jeweilige Messpunkt eines Messelements zumindest eines Teils der Messelemente jeweils auf unterschiedlichen Höhen entlang der Längsachse des Mantels angeordnet sind. Eine derartige Temperaturmessvorrichtung ist insbesondere zur Bestimmung der Temperatur auf unterschiedlichen Höhen entlang der Längsachse des Mantels, d.h. des Temperaturverlaufs, geeignet.

In einer weiteren Ausführungsform der Temperaturmessvorrichtung unterscheiden sich bei zumindest einem Teil der Messelemente die jeweilige Länge der ersten Strecke und der zweiten Strecke voneinander. Der Messpunkt der jeweiligen Messelemente liegt also auf unterschiedlicher Höhe entlang der Längsachse des Mantels. Dadurch weisen die Messelemente erste und zweite Strecken, d.h. Strecken die aus dem Thermodrähten bestehen und Strecken die aus den Anschlussdrähten bestehen, unterschiedlicher Längen auf. Ferner weisen die aus Thermodrähten und Anschlussdrähten bestehenden In einer weiteren Ausführungsform der Temperaturmessvorrichtung sind die Messelemente zu einem Messeinsatz zusammengefasst, der in den als Schutzrohr dienenden Mantel eingesetzt ist. Dadurch wird ein besonders kompakter Aufbau eines Mehrpunktmesseinsatzes erreicht. Ein Messeinsatz kann auch aus nur einem Messelemente bestehen.

In einer weiteren Ausführungsform der Temperaturmessvorrichtung ist zumindest ein Keramikformteil in den Mantel eingesetzt, das Bohrungen zur Aufnahme und Positionierung der einzelnen Messelemente aufweist. Das Keramikformteil ist dabei vorzugsweise an die Kontur des Mantels angepasst. Ferner weist das Keramikformteil beispielsweise eine kreiszylindrische Form auf, durch welche hindurch sich Bohrungen erstrecken. In einer Ausführungsform der Temperaturmessvorrichtung sind mehrere Keramikformteile in dem Mantel eingesetzt, wobei die Keramikelemente derart auf die Messelemente abgestimmt sind, dass der Messpunkt der jeweiligen Messelemente jeweils zwischen aneinander grenzende Keramikformteile liegt. Die Keramikformteile können dabei beispielsweise aufeinander gestapelt in den Mantel eingesetzt sein.

Hinsichtlich des Messelementes wird die Aufgabe durch ein Messelement für eine Temperaturmessvorrichtung nach einer der vorherigen Ausführungsformen gelöst. Das Messelement weist also wenigstens zwei Thermodrähte und wenigstens zwei Anschlussdrähte auf.

Hinsichtlich des Verfahrens wird die Aufgabe durch ein Verfahren zum Herstellen einer Temperaturmessvorrichtung gelöst, wobei ein aus wenigstens zwei Thermodrähten bestehendes Thermoelement mit Anschlussdrähten, die aus einem Material bestehen, welches Material eine höhere Zugfestigkeit aufweist als die Thermodrähte, verbunden werden, und in einem Mantel derart angeordnet werden, dass sich die Thermodrähte eine erste Strecke zumindest bis zu einem Messpunkt an dem die Thermodrähte miteinander verbunden sind, entlang der Längsachse des Mantels erstrecken und dass sich die Anschlussdrähte eine zweite Strecke entlang der Längsachse des Mantels auf der den Thermodrähten gegenüberliegenden Seite des Messpunkt erstrecken.

In einem ersten Verfahrensschritt werden also Thermodrähte mit Anschlussdrähten, die aus einem von dem Thermodrähten unterschiedlichen Materialien bestehen verbunden um Leiterelemente zu bilden. Anschließend können diese Leiterelemente in einem Mantel eingesetzt werden, so dass sich die Thermodrähte eine erste Strecke und die Anschlussdrähte eine zweite Strecke in dem Mantel erstrecken. Die Thermodrähte können entweder vor dem Einsetzen in dem Mantel oder danach miteinander verbunden werden, um einen Messpunkt zu bilden

In einer Ausführungsform des Verfahrens werden die Messelemente in wenigstens ein Keramikformteil, das Bohrungen zur Aufnahme und Positionierung des wenigstens einen Messelements aufweist, eingesetzt. In dieser Ausführungsform wird der Messpunkt bevorzugt erst nach dem Einsetzen der Messelemente in das wenigstens eine Keramikformteil gebildet.

In einer weiteren Ausführungsform des Verfahrens wird der Messpunkt durch Wickeln oder Knoten der Thermodrähte hergestellt. Insbesondere im Falle mehrerer Keramikformteile, in welche die Messelemente eingesetzt werden, kann nach dem Einsetzen der Messelemente in die Keramikformteile jeweils ein Messpunkt gebildet werden, der beispielsweise durch Verdrehen der Keramikformteile oder der Leiterelemente gebildet wird.

In einer weiteren Ausführungsform des Verfahrens wird der Messpunkt durch ein Punktschweißverfahren wie beispielsweise ein Laser-, Plasma- oder Lichtbogenschweißverfahren hergestellt.

Die Erfindung wird anhand der nachfolgenden Zeichnungen näher erläutert. Es zeigt: Fig. 1 a: eine erste Ausführungsform der vorgeschlagenen Erfindung, bei der ein Paar von Thermodrähten mit einem Paar von Anschlussdrähten verbunden ist, Fig. 1 b: eine zweite Ausführungsform der vorgeschlagenen Erfindung, bei der ein Paar von Thermodrähten mit Anschlussdrähten verbunden ist, Fig. 2: eine weitere Ausführungsform der vorgeschlagenen Erfindung, bei der ein Paar von Thermodrähten mit einem Paar von Anschlussdrähten verbunden sind, Fig. 3: eine Ausführungsform der vorgeschlagenen Erfindung gem. der die Thermodrähte und die Anschlussdrähte abschnittsweise in Formteile eingesetzt sind, Fig. 4: eine Ausführungsform der vorgeschlagenen Erfindung gem. der die aus Thermodrähten und Anschlussdrähten gebildeten Messelemente in einem zylindrischen Mantel angeordnet sind.

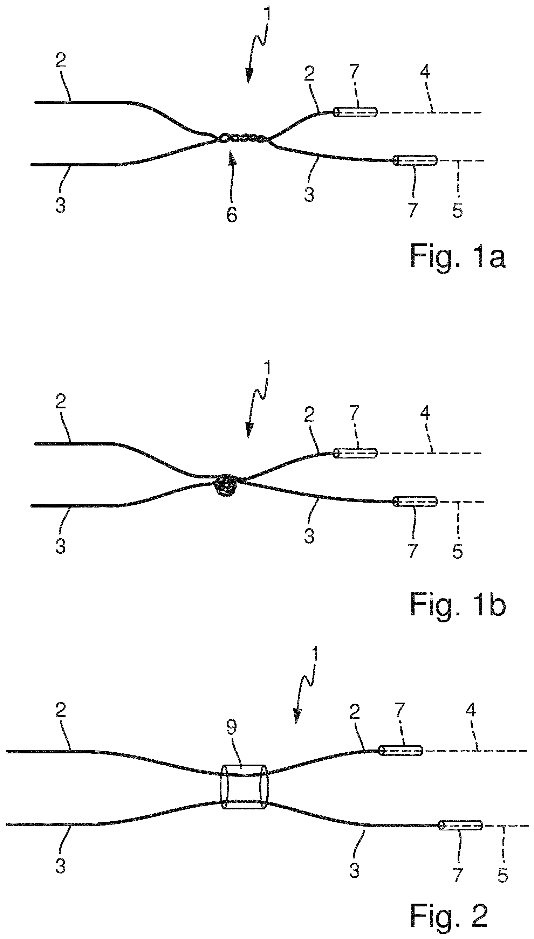

Fig. 1a zeigt ein Paar von Thermodrähten 2,3, welches Paar aus einem ersten Thermodraht 2 und einem zweiten Thermodraht 3 besteht und welche Thermodrähte 2,3 an einem Messpunkt 6 um einander gewickelt sind. Die Thermodrähte 2,3 erstrecken sich dabei bis zu der Wicklung, die den Messpunkt 6 bildet und darüber hinaus. Die sich über dem Messpunkt 6 hinaus erstreckenden Abschnitte der Thermodrähte 2,3 sind an ihren Enden mit einem Paar von Anschlussdrähten 4,5 verbunden. Das Paar der Anschlussdrähte 4,5 besteht dabei aus einem ersten Anschlussdraht 4 und einem zweiten Anschlussdraht 5. Der erste Anschlussdraht 4 ist mit dem ersten Thermodraht 2 und der zweite Anschlussdraht 5 mit dem zweiten Thermodraht 5 verbunden.

Materialien um Thermoelemente zu bilden, sind dem Fachmann aus dem Stand der Technik zur Genüge bekannt. Entsprechende Thermoelemente verschiedenen Typs sind bspw. in der DIN/EN60584-1/IEC584-1 bekannt geworden. Als Material für die Anschlussdrähte 4, 5 kommt beispielsweise Kupfer oder ein hauptsächlich bzw. mehrheitlich Kupfer und/oder Chrom und/oder Nickel enthaltendes Material in Frage. Weiterhin sind Verbindungen, welche Chrom und/oder Nickel und/oder Kupfer als Material für die Anschlussdrähte enthalten, möglich. Die Anteile der Bestandteile der für die Anschlussdrähte verwendeten Materialien unterscheiden sich jedoch von den Anteilen der Bestandteile, die für die Thermodrähte verwendet werden. Ferner können die Anschlussdrähte andere oder weitere als die für die Thermodrähte verwendeten Materialien als Bestandteil bzw. Bestandteile aufweisen. Ferner sind weitere u.a. auch nicht-metallische Materialien oder nicht metallische Bestandteile enthaltende Materialien als Materialien, aus denen die Anschlussdrähte bestehen, möglich. Die Anschlussdrähte bestehen bspw. aus dem gleichen Material, können jedoch auch aus unterschiedlichen Materialien bestehen. Ferner können die Anschlussdrähte verschiedener Messelemente auch aus verschiedenen Materialien bestehen.

Fig. 1b zeigt im Wesentlichen den gleichen Aufbau wie Fig. 1a. Jedoch wird der Messpunkt 6 in Fig. 1 b im Gegensatz zu Fig. 1 a nicht durch Wickeln der Thermodrähte 2, 3 gebildet, sondem die Thermodrähte 2, 3 werden verknotet, um einen Messpunkt 6 zu bilden. Wie in Fig. 1a sind auch hier die Enden der Thermodrähte 2, 3 mit den Anschlussdrähten 4,5 verbunden. Als Verbindungsmittel, um die Enden der Thermodrähte 2, 3 mit den entsprechenden Enden der Anschlussdrähte 4,5 zu verbinden, können, wie in Fig. 1 a und Fig. 1 b gezeigt, Ösen 7 aus geeigneten Metalllegierungen und/oder aus Metallgemischen bestehen.

Um den Messpunkt 6 dauerhaft zu fixieren, kann die Umwicklung beziehungsweise die Verknotung der Thermodrähte 2, 3 mittels eines geeigneten Schweißverfahrens fixiert werden. Beispielsweise kommen dafür eine Punktschweißung, eine Laserschweißung und/oder eine Plasmaschweißung in Betracht. Ferner ist dabei ein geeigneter und auch ausreichender Materialvorrat für den anschließenden Ziehprozess vorzusehen. Dieser Materialvorrat kann beispielsweise in Form einer zusätzlichen Schleife bei der Umwicklung oder der Verknotung gebildet werden. Dadurch kann ein besonders zuverlässiger Ziehprozess erreicht werden, so dass ein Abreißen oder Abbrechen der Thermodrähte 2, 3 beziehungsweise der Anschlussdrähte 4,5 verhindert werden kann.

In Fig. 2 ist eine alternative Ausführungsform der vorgeschlagenen Erfindung in Form eines Messelements gezeigt. Ebenso wie in den Fig. 1 a und 1 b sind dabei zwei Thermodrähte 2, 3 mit zwei Anschlussdrähten 4, 5 verbunden. Der Messpunkt 6 wird aber gemäß der Ausführungsform mit Fig. 2 mittels einer Hülse 9 gebildet. Die Thermodrähte 2, 3 werden dazu in die Hülse 9 eingeführt, sodass die Hülse 9 den Kontaktpunkt zwischen den beiden Thermodrähten 2, 3 bildet. Dieser Kontaktpunkt zwischen den Thermodrähten 2, 3 bildet dann auch den Messpunkt 6. Mittels einer Punktschweißung, einer Laserschweißung, oder einer Plasmaschweißung können dann die Thermodrähte 2, 3 an der Hülse 9 oder mit der Hülse befestigt werden. Wie in Fig. 2 gezeigt, können die Thermodrähte 2, 3 nicht nur in die Hülse 9 eingeführt, sondern auch durch die Hülse 9 durchgeführt werden, so dass ein Abschnitt der Thermodrähte 2, 3 über die Hülse 9 hinaus reicht. Die Enden der Thermodrähte 2, 3 werden dann beispielsweise mittels Quetschösen 7 mit den Anschlussdrähten 4, 5 verbunden. Die Hülse 9 besteht dabei bevorzugt aus dem Material einer der Thermodrähte 2, 3.

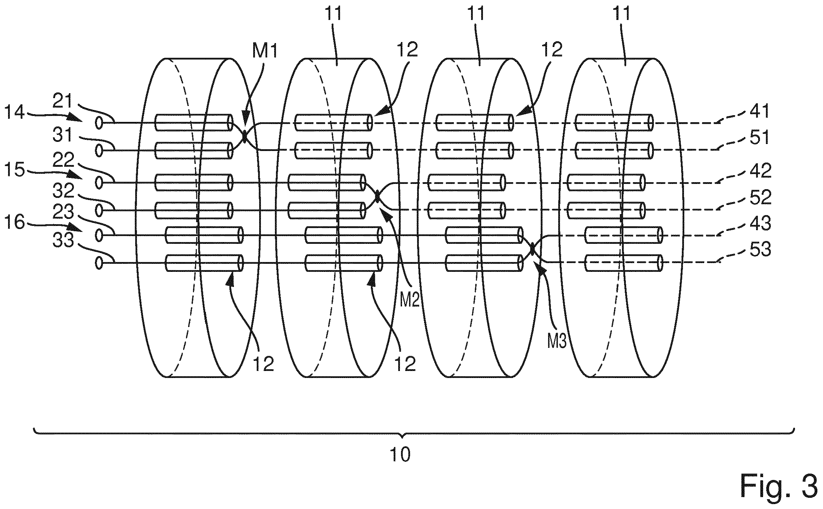

Fig. 3 zeigt eine weitere Ausführungsform der vorgeschlagenen Erfindung bei der mehrere Messelemente 14, 15, 16, die in bevorzugt keramische Formteile 11 eingesetzt sind, verwendet werden.

Die Messelemente 14, 15, 16 bestehen jeweils aus einem Paar von Thermodrähten 21, 31; 22, 32; 23, 33 und einem Paar von Anschlussdrähten 41, 51; 42, 52; 43, 53. Thermodrähte als auch Anschlussdrähte werden durch entsprechende Bohrungen 12 in den Formteilen 11, die vorzugsweise aus einer Keramik bestehen, geführt. Der Messpunkt M1, M2, M3 des jeweiligen Paares von Thermodrähten 21, 31; 22, 32; 23, 33 ist dabei zwischen zwei aufeinander folgende Formteile 11 angeordnet. In Fig. 3 ist dabei jeweils nur genau ein Messpunkt 14, 15, 16 zwischen zwei aufeinanderfolgenden Formteilen 11 angeordnet. Es können aber auch mehrere Messpunkte, nicht abgebildet, zwischen zwei aufeinanderfolgenden Formteilen vorgesehen sein. Zwischen den aus den Formteilen 11 herausragenden, bzw.- wenn die Formteile in den Mantel eingesetzt sindden aus dem Mantel herausragenden, freien Enden der Thermodrähte 21, 31; 22, 32; 23, 33 kann dann eine auf dem jeweiligen Messpunkt M1, M2, M3 bezogene Thermospannung abgegriffen werden.

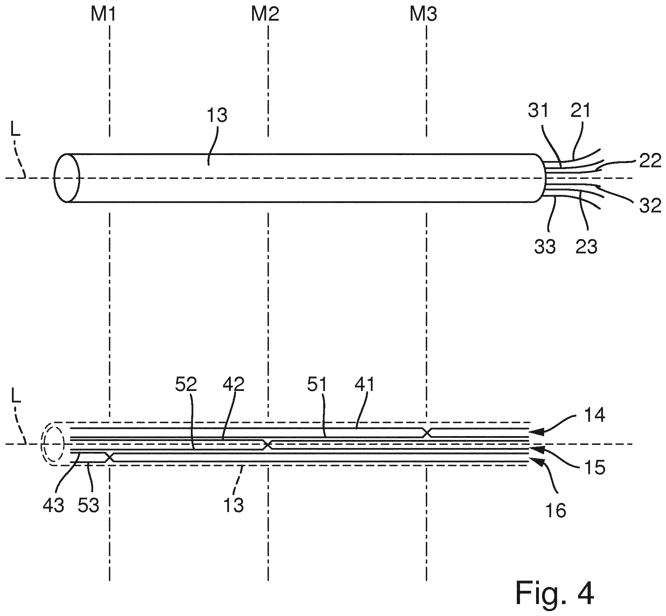

Fig. 4 zeigt eine weitere Ausführungsform der vorgeschlagenen Erfindung bei der mehrere Messelemente 14, 15, 16 in einem Mantel 13 angeordnet sind. Der Messpunkt M1, M2, M3 der Messelemente 14, 15, 16 ist dabei an einer einmaligen Stelle, d. h. an einer einmaligen Höhe entlang der Längsachse L des Mantels 13 angeordnet. Die Thermodrähte 21, 31; 22, 32; 23, 33 erstrecken sich dabei über eine erste Strecke entlang der Längsachse L des Mantels 13 und die Anschlussdrähte 41, 51; 42, 52; 43, 53 über eine zweite Strecke entlang der Längsachse L des Mantels 13. Die in Fig. 4 gezeigte Temperaturmessvorrichtung 1 kann somit zur Bestimmung des Temperaturverlaufs entlang der Längsachse L des Mantels 13, d. h. der Temperaturmessvorrichtung 1 verwendet werden.

Dadurch, dass die Anschlussdrähte 41, 51; 42, 52; 43, 53 aus einem anderem Material bestehen als die Thermodrähte 21, 31; 22, 32; 23, 33, kann eine besonders günstige Temperaturmessvorrichtung hergestellt werden. Das Material, aus dem die Anschlussdrähte 41, 51; 42, 52; 43, 53 bestehen, kann, gegenüber dem Material, aus dem die Thermodrähte 21, 31; 22, 32; 23, 33 bestehen, eine erhöhte thermische als auch mechanische Festigkeit aufweisen. Dadurch können die Messelemente und die Temperaturmessvorrichtung 1 den erhöhten mechanischen Belastungen, wie sie beim herstellungsbedingten Ziehprozess auftreten, standhalten. Ferner kann das Material, aus dem die Anschlussdrähte 41, 51; 42, 52; 43, 53 bestehen, auch aus einem nichtmetallischen Material bestehen. Die beispielsweise in Fig. 3 gezeigten Formteile sind der Übersichtlichkeit halber in Fig. 4 nicht dargestellt. Diese können jedoch in den zielfähigen metallischen rohrförmigen Mantel 13 eingebracht sein. Die Formteile 11 weisen dabei, wie gesagt, Bohrungen 12 auf, durch die hindurch die Thermodrähte 21, 31; 22, 32; 23, 33 beziehungsweise die Anschlussdrähte 41, 51; 42, 52; 43, 53 geführt sind. In einer Ausgestaltung können die Durchmesser der Bohrung 12 in dem, dem jeweiligen Messpunkt M1, M2, M3 zugewandten Bohrungsendabschnitt erweitert werden, um weitere Verbindungselemente 9 aufzunehmen. Bei den Verbindungselementen 9 kann es sich, wie bereits gesagt, um Ösen oder Hülsen handeln. Diese Ösen oder Hülsen können aus dem Material des ersten Thermodrahtes 21, 22, 23 oder dem Material des zweiten Thermodrahtes 31; 32; 33bestehen.

## Patentansprüche

1. Temperaturmessvorrichtung (1) mit wenigstens einem Messelement (14, 15 ,16),
wobei die Temperaturmessvorrichtung (1) einen, vorzugsweise zylindrischen, besonders bevorzugt metallischen, Mantel (13) aufweist, in dem das Messelement (14, 15, 16) angeordnet ist,
wobei das Messelement (14, 15, 16) ein Thermoelement umfasst, das aus wenigstens zwei Thermodrähten (2, 3) besteht,
welche Thermodrähte (2, 3) auf einer Höhe entlang der Längsachse (L) des Mantels (13) an einem Messpunkt (M1, M2, M3) miteinander verbunden sind,
wobei die Thermodrähte (2, 3) eine erste Strecke entlang der Längsachse (L) des Mantels (13) zumindest bis zu dem Messpunkt (M1, M2, M3) verlaufen, **dadurch gekennzeichnet, dass** das Messelement (14, 15, 16) ferner zumindest zwei Anschlussdrähte (4, 5) aufweist, die eine zweite Strecke auf der den Thermodrähten (2, 3) gegenüberliegenden Seite des Messpunkts (M1,M2, M3) entlang der Längsachse (L) des Mantels (13) verlaufen und mit den Thermodrähten (2, 3) verbunden sind,
wobei die zwei Anschlussdrähte (4, 5) aus einem Material bestehen, welches Material eine höhere Zugfestigkeit aufweist als die Thermodrähte (2, 3).

2. Temperaturmessvorrichtung (1) nach Anspruch 1,
wobei die Thermodrähte (2, 3) zur Bestimmung der Temperatur dienen, und zwischen den Enden der Thermodrähte (2, 3) eine der Temperatur am Messpunkt (M1, M2, M3) entsprechende Spannung abgreifbar ist.

3. Temperaturmessvorrichtung (1) nach Anspruch 1 oder 2,
wobei die Anschlussdrähte (4, 5) auf der den Thermodrähten (2, 3) gegenüberliegenden Seite des Messpunkts (6) verlaufen und vorzugsweise auf der den Thermodrähten (2, 3) gegenüberliegenden Seite des Messpunkts (6) mit den Thermodrähten (4, 5) verbunden sind, wobei die Thermodrähte (2, 3) jeweils einen ersten Abschnitt aufweisen, der bis zu dem Messpunkt (6) verläuft und einen zweiten Abschnitt aufweisen, der zwischen dem Messpunkt (6) und den Anschlussdrähten (2, 3) verläuft, und wobei sich die Anschlussdrähte (4, 5) an die Thermodrähte (2, 3) anschließen und Verlängerungen der Thermodrähte (2, 3) bilden.

4. Temperaturmessvorrichtung (1) nach einem der vorherigen Ansprüche,
wobei die erste Strecke und die zweite Strecke entlang der Längsachse (L) des Mantels (13) durch die Höhe entlang der Längsachse (L) des Mantels (13), auf der die Verbindung zwischen den Thermodrähten (2, 3)und den Anschlussdrähten (4, 5) liegt, vorgegeben sind.

5. Temperaturmessvorrichtung (1) nach einem der vorherigen Ansprüche,
wobei der erste Anschlussdraht (4) auf einer Höhe entlang der Längsachse (L) des Mantels (13) mit dem ersten Thermodraht (2) verbunden ist, die sich von der Höhe entlang der Längsachse (L) des Mantels (13) unterscheidet, auf der der zweite Anschlussdrahtmit (5) dem zweiten Thermodraht (3) verbunden ist.

6. Temperaturmessvorrichtung (1) nach einem der vorherigen Ansprüche,
wobei die Anschlussdrähte (4, 5) mit den Thermodrähten (2, 3) mittels Quetschösen (7) oder mittels eines ring- oder hülsenförmigen Verbindungsmittels (9), das vorzugsweise aus dem Material eines der Thermodrähte (2, 3) besteht, und besonders bevorzugt aus einem Material, das sich von demjenigen der Thermodrähte (2, 3) unterscheidet, besteht, miteinander verbunden sind.

7. Temperaturmessvorrichtung (1) nach einem der vorherigen Ansprüche,
wobei die Thermodrähte (2, 3)mit den Anschlussdrähten (4, 5) am Messpunkt (6, M1, M2, M3) verbunden sind.

8. Temperaturmessvorrichtung (1) nach einem der vorherigen Ansprüche,
wobei die beiden Anschlussdrähte (4, 5) aus dem gleichen Material bestehen.

9. Temperaturmessvorrichtung (1) nach einem der vorherigen Ansprüche,
wobei die Temperaturmessvorrichtung (1) mehrere Messelemente (14, 15, 16) umfasst,
wobei der jeweilige Messpunkt (M1, M2; M3) eines Messelements (14, 15, 16) zumindest eines Teils der Messelemente (14, 15, 16) jeweils auf unterschiedlichen Höhen entlang der Längsachse (L) des Mantels (13) angeordnet ist.

10. Temperaturmessvorrichtung (1) nach einem der vorherigen Ansprüche,
wobei die Messelemente (14, 15, 16) zu einem Messeinsatz (10) zusammengefasst sind, der in den als Schutzrohr dienenden Mantel (13) eingesetzt ist.

11. Temperaturmessvorrichtung (1) nach einem der vorherigen Ansprüche,
wobei in den Mantel (13) zumindest ein, vorzugsweise an die Kontur des Mantels (13) angepasstes, Formteil (11) eingesetzt ist, das Bohrungen (12) zur Aufnahme und Positionierung der Messelemente (14, 15, 16) aufweist.

12. Temperaturmessvorrichtung (1) nach einem der vorherigen Ansprüche,
wobei mehrere stapelbare in den Mantel einsetzbare Formteile (11) vorgesehen sind,
wobei die Formteile (11) derart auf die Messelemente (14, 15, 16) abgestimmt sind, dass der Messpunkt (M1, M2, M3) der jeweiligen Messelemente(14, 15, 16) jeweils zwischen zwei aneinander grenzenden Formteilen (11) liegt.

13. Messelement (10) für eine Temperaturmessvorrichtung (1) nach einem der vorherigen Ansprüche.

14. Verfahren zum Herstellen einer Temperaturmessvorrichtung (1),
wobei ein aus wenigstens zwei Thermodrähten (2, 3) bestehendes Thermoelement mit Anschlussdrähten (4, 5), die aus einem Material bestehen, welches Material eine höhere Zugfestigkeit aufweist als die Thermodrähte (2, 3), verbunden werden,
und in einem Mantel (13) derart angeordnet werden, dass sich die Thermodrähte (2, 3) eine erste Strecke zumindest bis zu einem Messpunkt (6), an dem die Thermodrähte (2, 3) miteinander verbunden sind, entlang der Längsachse (L) des Mantels (13) erstrecken und dass sich die Anschlussdrähte (4, 5) ein zweite Strecke entlang der Längsachse (L) des Mantels (13) auf der den Thermoelementen (2, 3) gegenüberliegenden Seite des Messpunkts (6) erstrecken.

15. Verfahren nach einem der vorherigen Verfahrensansprüche,
wobei der Messpunkt (6) durch Wickeln oder Knoten der Thermodrähte (2, 3), oder durch ein Punktschweißverfahren, ein Laser-, Plasma- oder Lichtbogenschweißverfahren, hergestellt wird.

## Claims

1. Temperature measuring apparatus (1) with at least one measuring element (14, 15, 16), wherein the temperature measuring apparatus (1) has a jacket (13), preferably a cylindrical and particularly preferably a metallic one, in which the measuring element (14, 15, 16) is arranged,
wherein the measuring element (14, 15, 16) comprises a thermocouple consisting of at least two thermowires (2, 3),
said thermowires (2, 3) being interconnected at a measuring point (M1, M2, M3) at a height along the longitudinal axis (L) of the jacket (13),
wherein the thermowires (2, 3) extend over a first section along the longitudinal axis (L) of the jacket (13) at least up to the measuring point (M1, M2, M3),
**characterized in that**
the measuring element (14, 15, 16) further comprises at least two connecting wires (4, 5), which extend along the longitudinal (L) axis of the jacket (13) over a second section on the side of the measuring point (M1, M2, M3) opposite the thermowires (2, 3) and are connected to the thermowires (2, 3),
wherein the two connecting wires (4, 5) are made from a material which has a higher tensile strength than the thermowires (2, 3).

2. Temperature measuring apparatus (1) as claimed in Claim 1,
wherein the thermowires (2, 3) are used to determine the temperature, and wherein a voltage corresponding to the temperature present at the measuring point (M1, M2, M3) can be measured between the ends of the thermowires (2, 3).

3. Temperature measuring apparatus (1) as claimed in Claim 1 or 2,
wherein the connecting wires (3, 4) extend over the side of the measuring point (6) opposite the thermowires (2, 3) and are preferably connected to the thermowires (4, 5) on the side of the measuring point (6) opposite the thermowires, wherein the thermowires (2, 3) each have a first section that extends as far as the measuring point (6) and a second section that extends between the measuring point (6) and the connecting wires (2, 3), and wherein the connecting wires (4, 5) follow on from the thermowires (2, 3), forming extensions of the thermowires (2, 3).

4. Temperature measuring apparatus (1) as claimed in one of the previous claims,
wherein the first section and the second section are predefined along the longitudinal axis (L) of the jacket (13) by the height along the longitudinal axis (L) of the jacket (13) at which the connection between the thermowires (2, 3) and the connecting wires (4, 5) is located.

5. Temperature measuring apparatus (1) as claimed in one of the previous claims,
wherein the first connecting wire (4) is connected to the first thermowire (2) at a height along the longitudinal axis (L) of the jacket (13) which is different from the height along the longitudinal axis (L) of the jacket (13) at which the second connecting wire (5) is connected to the second thermowire (3).

6. Temperature measuring apparatus (1) as claimed in one of the previous claims,
wherein the connecting wires (4, 5) are connected with the thermowires (2, 3) using crimp-type grommets (7) or using an annular or sleeve-like connector (9) which is preferably made from the material of one of the thermowires (2, 3), and particularly preferably from a material that is different to the material of the thermowires (2, 3).

7. Temperature measuring apparatus (1) as claimed in one of the previous claims,
wherein the thermowires (2, 3) are connected with the connecting wires (4, 5) at the measuring point (6, M1, M2, M3).

8. Temperature measuring apparatus (1) as claimed in one of the previous claims,
wherein the two connecting wires (4, 5) are made from the same material.

9. Temperature measuring apparatus (1) as claimed in one of the previous claims,
wherein the temperature measuring apparatus (1) comprises several measuring elements (14, 15, 16), wherein the specific measuring point (M1, M2, M3) of a measuring element (14, 15, 16) of at least one part of the measuring element (14, 15, 16) is arranged in each case at different heights along the longitudinal axis (L) of the jacket (13).

10. Temperature measuring apparatus (1) as claimed in one of the previous
claims,
wherein the measuring elements (14, 15, 16) are grouped into a measuring insert (10) which is inserted into the jacket (13) serving as a protective tube.

11. Temperature measuring apparatus (1) as claimed in one of the previous
claims,
wherein at least one molded part (11), preferably one adapted to the contour of the jacket (13), is inserted into the jacket (13), said molded part having bores to accommodate and position the measuring elements (14, 15, 16).

12. Temperature measuring apparatus (1) as claimed in one of the previous claims,
wherein multiple stackable molded parts (11), which can be inserted into the jacket, are provided, wherein the molded parts (11) are aligned with the measuring elements (14, 15, 16) in such a way that the measuring point (M1, M2, M3) of the individual measuring elements (14, 15, 16) is situated in each case between two adjacent molded parts (11).

13. Measuring element (10) for a temperature measuring apparatus (1) as claimed in one of the previous claims.

14. Process for manufacturing a temperature measuring apparatus (1),
wherein a thermocouple consisting of at least two thermowires (2, 3) is connected with connecting wires (4, 5) that are made from a material which has a higher tensile strength as the thermowires (2, 3),
and is arranged in a jacket (13) in such a way that the thermowires (2, 3) extend along the longitudinal axis (L) of the jacket (13) over a first section at least as far as a measuring point (6) at which the thermowires (2, 3) are interconnected, and in such a way that the connecting wires (4, 5) extend along the longitudinal axis (L) of the jacket (13) over a second section on the side of the measuring point (6) opposite the thermocouples (6).

15. Procedure as claimed in one of the previous process claims,
wherein the measuring point (6) is produced by winding or knotting the thermowires (2, 3) or by means of spot-welding, laser welding, plasma welding or arc welding.

## Revendications

1. Dispositif de mesure de température (1) avec au moins un élément de mesure (14, 15, 16), le dispositif de mesure de température (1) présentant une enveloppe (13) de préférence cylindrique, particulièrement de préférence métallique, dans laquelle est disposé l'élément de mesure (14, 15, 16),
pour lequel l'élément de mesure (14, 15, 16) comprend un thermocouple constitué d'au moins deux fils thermoélectriques (2, 3),
lesquels fils thermoélectriques (2, 3) sont reliés entre eux sur une hauteur le long de l'axe longitudinal (L) de l'enveloppe (13) en un point de mesure (M1, M2, M3),
les fils thermoélectriques (2, 3) s'étendant sur une première section le long de l'axe longitudinal (L) de l'enveloppe (13) au moins jusqu'au point de mesure (M1, M2, M3),
**caractérisé**
**en ce que** l'élément de mesure (14, 15, 16) comporte en outre au moins deux fils de raccordement (4, 5), qui s'étendent sur une deuxième section le long de l'axe longitudinal (L) de l'enveloppe (13), sur le côté opposé aux fils thermoélectriques (2, 3) du point de mesure (M1, M2, M3), et sont reliés avec les fils thermoélectriques (2, 3),
les deux fils de raccordement (4, 5) étant constitués d'un matériau présentant une résistance à la traction supérieure à celles des fils thermoélectriques (2, 3).

2. Dispositif de mesure de température (1) selon la revendication 1,
pour lequel les fils thermoélectriques (2, 3) servent à la détermination de la température, et pour lequel une tension correspondant à la température au point de mesure (M1, M2, M3) peut être prélevée entre les extrémités des fils thermoélectriques (2, 3).

3. Dispositif de mesure de température (1) selon la revendication 1 ou 2,
pour lequel les fils de raccordement (3, 4) s'étendent sur le côté opposé aux fils thermoélectriques (2, 3) du point de mesure (6) et sont de préférence reliés avec les fils thermoélectriques (2, 3) sur le côté opposé aux fils thermoélectriques (2, 3) du point de mesure (6), les fils thermoélectriques (2, 3) présentant respectivement une première section, qui s'étend entre le point de mesure (6) et les fils de raccordement (4, 5), et les fils de raccordement (4, 5) étant raccordés aux fils thermoélectriques (2, 3), formant ainsi une prolongation des fils thermoélectriques (2, 3).

4. Dispositif de mesure de température (1) selon l'une des revendications précédentes,
pour lequel le premier tronçon et le deuxième tronçon sont prédéfinis le long de l'axe longitudinal (L) de l'enveloppe (13) par la hauteur le long de l'axe longitudinal (L) de l'enveloppe (13), à laquelle se situe la connexion entre les fils thermoélectriques (2, 3) et les fils de raccordement (4, 5).

5. Dispositif de mesure de température (1) selon l'une des revendications précédentes,
pour lequel le premier fil de raccordement (4) est relié sur une hauteur le long de l'axe longitudinal (L) de l'enveloppe (13) avec le premier fil thermoélectrique (2), qui se distingue de la hauteur le long de l'axe longitudinal (L) du manteau (13), à laquelle le deuxième fil de raccordement (5) est relié avec le deuxième fil thermoélectrique (3).

6. Dispositif de mesure de température (1) selon l'une des revendications précédentes,
pour lequel les fils de raccordement (4, 5) sont reliés avec les fils thermoélectriques (2, 3) à l'aide de cosses à sertir (7) ou à l'aide d'un moyen de raccordement (9) en forme de bague ou de douille, qui est de préférence constitué du matériau de l'un des fils thermoélectriques (2, 3), et particulièrement de préférence d'un matériau qui se distingue de celui des fils thermoélectriques (2, 3).

7. Dispositif de mesure de température (1) selon l'une des revendications précédentes,
pour lequel les fils thermoélectriques (2, 3) sont reliés avec les fils de raccordement (4, 5) au point de mesure (6, M1, M2, M3).

8. Dispositif de mesure de température (1) selon l'une des revendications précédentes,
pour lequel les deux fils de raccordement (4, 5) sont constitués du même matériau.

9. Dispositif de mesure de température (1) selon l'une des revendications précédentes,
lequel dispositif de mesure de température (1) comprend plusieurs éléments de mesure (14, 15, 16), le point de mesure (M1, M2, M3) respectif d'un élément de mesure (14, 15, 16) d'au moins une partie des éléments de mesure (14, 15, 16) étant disposé respectivement sur différentes hauteurs le long de l'axe longitudinal (L) de l'enveloppe (13).

10. Dispositif de mesure de température (1) selon l'une des revendications précédentes,
pour lequel les éléments de mesure (14, 15, 16) sont regroupés en un ensemble de mesure (10), qui est introduit dans l'enveloppe (13) servant de tube de protection.

11. Dispositif de mesure de température (1) selon l'une des revendications précédentes,
pour lequel est introduite dans l'enveloppe (13) au moins une pièce formée (11), de préférence adaptée au contour de l'enveloppe (13), laquelle pièce comporte des trous (12) destinés au logement et au positionnement des éléments de mesure (14, 15, 16).

12. Dispositif de mesure de température (1) selon l'une des revendications précédentes,
pour lequel sont prévues plusieurs pièces formées (11) pouvant être introduites sous forme d'une pile dans l'enveloppe, les pièces formées (11) étant assorties aux éléments de mesure (14, 15, 16) de telle sorte que le point de mesure (M1, M2, M3) des éléments de mesure (14, 15, 16) correspondants se situe respectivement entre deux pièces formées (11) adjacentes.

13. Élément de mesure (10) pour un dispositif de mesure de température (1) selon l'une des revendications précédentes.

14. Procédé destiné à la fabrication d'un dispositif de mesure de température (1), pour lequel un thermocouple constitué d'au moins deux fils thermoélectriques (2, 3) est relié avec des fils de raccordement (4, 5), qui sont constitués d'un matériau dont la résistance à la traction est supérieure à celle des fils thermoélectriques (2, 3),
et est disposé dans une enveloppe (13) de telle sorte que les fils thermoélectriques s'étendent le long de l'axe longitudinal (L) de l'enveloppe (13) sur un premier tronçon au moins jusqu'à un point de mesure (6), au niveau duquel les fils thermoélectriques (2, 3) sont reliés entre eux, et de telle sorte que les fils de raccordement (4, 5) s'étendent le long de l'axe longitudinal (L) de l'enveloppe (13) sur le côté opposé aux des fils thermoélectriques (2, 3) du point de mesure (6).

15. Procédé selon l'une des revendications de procédé précédentes,
pour lequel le point de mesure (6) est établi par l'enroulement ou le nouage des fils thermoélectriques (2, 3) ou par un procédé de soudage par points, au laser, au plasma ou à l'arc.
